(19) **Europäisches Patentamt**
**European Patent Office**
**Office européen des brevets**

(11) **EP 1 576 623 B1**

(12) **EUROPEAN PATENT SPECIFICATION**

(45) Date of publication and mention
of the grant of the patent:
**10.01.2007 Bulletin 2007/02**

(51) Int Cl.:
*H01B 3/30* (2006.01)     *C08J 5/18* (2006.01)
*C08J 7/00* (2006.01)

(21) Application number: **03741052.9**

(22) Date of filing: **07.03.2003**

(86) International application number:
**PCT/IN2003/000046**

(87) International publication number:
**WO 2004/015719 (19.02.2004 Gazette 2004/08)**

(54) **FRICTION AND RELEASE COATED POLYMIDE FILM FOR ELECTRICAL INSULATION AND THE PROCESS OF MANUFACTURING THE SAME**

REIBUNGS- UND RELEASE- BESCHICHTETER POLYIMIDFILM FÜR ELEKTRISCHE ISOLIERUNG SOWIE EIN PROZESS ZUR HERSTELLUNG

PELLICULE POLYIMIDE POURVUE D'UN REVETEMENT DE FRICTION ET D'UN REVETEMENT ANTIADHESIF UTILISEE A DES FINS D'ISOLATION ELECTRIQUE ET SON PROCEDE DE PRODUCTION

(84) Designated Contracting States:
**CH DE GB LI**

(30) Priority: **13.08.2002 IN MU07302002**

(43) Date of publication of application:
**21.09.2005 Bulletin 2005/38**

(73) Proprietors:
• **Anam, Dinesh M.**
  **Mulund Colony, Mumbai - 400 082 (IN)**
• **Manna, Praphulla Kumar**
  **Mumbai 400 086,**
  **Maharashtra (IN)**
• **Shroff, Pradip Hiralal**
  **Mumbai 400 007,**
  **Maharashtra (IN)**

(72) Inventors:
• **Anam, Dinesh M.**
  **Mulund Colony, Mumbai - 400 082 (IN)**
• **Manna, Praphulla Kumar**
  **Mumbai 400 086,**
  **Maharashtra (IN)**
• **Shroff, Pradip Hiralal**
  **Mumbai 400 007,**
  **Maharashtra (IN)**

(74) Representative: **Dörries, Hans Ulrich**
  **Dörries, Frank-Molnia & Pohlman,**
  **Triftstrasse 13**
  **80538 München (DE)**

(56) References cited:
**EP-A- 0 441 321**     **EP-A- 0 489 429**
**EP-A- 0 605 112**     **US-A- 4 543 295**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 576 623 B1

**Description**

FIELD OF THE INVENTION:

This invention relates to the manufacture of "Friction and Release Coated Polyimide Film for Electrical Insulation" and the process of manufacturing the same. It consists of polyimide film coated with a special friction coating on one side and controlled release coating on the other side of the polyimide film. Friction coating gives the polyimide film higher varnish absorption properties and the release coating helps in the ease of application.

DESCRIPTION OF THE PRIOR ART :

Insulating materials cover copper conductors to retain the insulating varnish close to the conductor. Presently, plain polyimide film on copper conductors is covered with various other alternatives to retain varnish close to the conductor and thereby build up thickness. Presently, Teflon coated glass cloth or glass cloth non-adhesive tape are used as covering materials.

INVENTION.

In high voltage coils where Vapour Pressure Impregnation is mandatory, it is highly desirable that there are no air gaps between the copper conductor and the polyimide film and that the coil/conductor is tightly bound by the resin. The newly developed insulating material has a special friction coating on one side which ensure that no air gaps are left between the copper conductor and the polyimide film, thus giving good electrical properties, mechanical strength and environmental protection.
The product developed is a Class H material (180 ° C)

SUMMARY OF THE INVENTION:

The process for manufacturing Friction and Release Coated Polyimide Film for Electrical Insulation comprises coating with a friction coating compound, a special binder having frictional properties on one side, the other side being coated with a controlled release coating, a special release material in order to ease the process of application.
Following are the steps involved in the manufacture of the Friction and Release Coated Polyimide Film for Electrical Insulation.

DESCRIPTION OF THE PREFERRED EMBODIMENTS:

/////////////////// FILM /////////////////////////// ⟶ Release Coating

/////////////////// FILM /////////////////////////// ⟶ Polyimide Film

/////////////////// FILM /////////////////////////// ⟶ Specially Formulated Friction Coating

The friction coating compound is prepared based on flexible binders like silicone, polyurethane, polyesters or epoxy resin followed by mixing with inorganic materials like silica which gives frictional properties. Silica used in this formulation is of special grade and even after grinding with resin it retains its roughness which is responsible for friction.
Polyimide film used in this invention is of different thickness ranging from 0.025 mm to 0.075 mm thickness.
The release coating is based on silicones or organic carbamates. It is specially formulated to give the controlled release.
Coating of the friction compound or the release compound of the polyimide film is carried out by conventional coating techniques like reverse roll coating or knife over roll coating.
The grammage of the friction coating compound varies from 10 to 20 gms per sq. meter depending upon the need and it requires a temperature of 190 °C for curing.

The deposition of the release coating is in the range of 0.20-0.6 gms per sq. meter. The curing temperature required for this coating is 170 ° C.

## Claims

1. A process for manufacturing a "Friction and Release Coated Polyimide Film for Electrical Insulation" comprising coating of polyimide film with a "Friction Coating Compound" on one side with a desired deposition using conventional coating methods and equipment, followed by
   drying/curing in conventional equipment, and
   coating with a "Controlled Release Compound" on the other side of the film with a desired deposition using conventional coating methods and equipment, followed by
   drying/curing in conventional equipment,
   wherein the "Friction Coating Compound" is based on flexible binders selected from the group consisting of silicone, polyurethane, polyesters or epoxy resin, mixed with inorganic materials, and
   wherein the "Controlled Release Coating" is based on silicones or organic carbamates.

2. The process of Claim 1, wherein the coating of the polyimide film with the "Friction Coating Compound" is done with a deposition of 10 to 20 g/m$^2$.

3. The process of Claim 1 or 2, wherein the coating with the "Controlled Release Compound" on the other side of the film is done with a deposition of 0.2 to 0.6 g/m$^2$.

4. A process for manufacturing "Friction and Release Coated Polyimide Film for Electrical Insulation" as claimed in Claims 1, 2 or 3, by which "Friction and Release Coated Polyimide Film" is obtained.

## Patentansprüche

1. Verfahren zur Herstellung eines "reibungs- und trennbeschichteten Polyimidfilms für die elektrische Isolierung", umfassend:

   Beschichten eines Polyimidfilms mit einem "Reibungsbeschichtungscompound" auf einer Seite mit einer gewünschten Absetzung unter Verwendung von konventionellen Beschichtungsverfahren und -geräten, gefolgt von Trocknen/Härten in konventionellen Geräten und
   Beschichten mit einem "gezielten Trenncompound" auf der anderen Seite des Films mit einer gewünschten Absetzung unter Verwendung von konventionellen Beschichtungsverfahren und -geräten, gefolgt von Trocknen/Härten in konventionellen Geräten,
   wobei das "Reibungsbeschichtungscompound" auf flexiblen Bindemitteln basiert, die aus der Gruppe bestehend aus Silikon, Polyurethan, Polyestern oder Epoxyharz, ausgewählt sind, gemischt mit anorganischen Materialien, und wobei die "gezielte Trennbeschichtung" auf Silikonen oder organischen Carbamaten basiert.

2. Verfahren nach Anspruch 1, wobei die Beschichtung des Polyimidfilms mit dem "Reibungsbeschichtungscompound" mit einer Absetzung von 10 bis 20 g/m$^2$ erfolgt.

3. Verfahren nach Anspruch 1 oder 2, wobei die Beschichtung mit dem "gezielten Trenncompound" auf der anderen Seite des Films mit einer Absetzung von 0,2 bis 0,6 g/m$^2$ erfolgt.

4. Verfahren zur Herstellung von "reibungs- und trennbeschichtetem Polyimidfilm für die elektrische Isolierung" nach Anspruch 1, 2 oder 3, nach dem "reibungs- und trennbeschichteter Polyimidfilm" erhalten wird.

## Revendications

1. Procédé de fabrication d'une « pellicule polyimide pourvue d'un revêtement de friction et d'un revêtement antiadhésif utilisée à des fins d'isolation électrique » comprenant
   le revêtement d'une pellicule polyimide avec « un composé de revêtement de friction » sur un côté avec un dépôt souhaité qui utilise des procédés et de l'équipement de revêtement traditionnels, suivi par

un séchage/un durcissement dans de l'équipement traditionnel et

le revêtement avec « un composé antiadhésif contrôlé » sur l'autre côté de la pellicule avec un dépôt souhaité qui utilise des procédés et de l'équipement de revêtement traditionnels, suivi par

un séchage/un durcissement dans de l'équipement traditionnel,

dans lequel le « composé de revêtement de friction » est basé sur des liants souples sélectionnés parmi le groupe constitué par le silicone, le polyuréthane, une résine époxy ou des polyester, mélangés avec des matériaux inorganiques, et

dans lequel le « revêtement antiadhésif contrôlé » est basé sur des silicones ou des carbamates organiques.

2. Procédé selon la revendication 1, dans lequel le revêtement de la pellicule polyimide avec le « composé de revêtement de friction » se fait avec un dépôt de 10 à 20 g/m$^2$.

3. Procédé selon l'une des revendications 1 ou 2, dans lequel le revêtement avec le « composé antiadhésif contrôlé » sur l'autre côté de la pellicule se fait avec un dépôt de 0,2 à 0,6 g/m$^2$.

4. Procédé de fabrication d'une « pellicule polyimide pourvue d'un revêtement de friction et d'un revêtement antiadhésif utilisée à des fins d'isolation électrique » selon les revendications 1, 2 ou 3, par lequel la « pellicule polyimide pourvue d'un revêtement de friction et d'un revêtement antiadhésif » est obtenue.